# EUROPÄISCHE PATENTSCHRIFT

(11) **EP 2 026 931 B1**
(45) Veröffentlichungstag und Bekanntmachung des Hinweises auf die Patenterteilung: **23.02.2011**
(21) Anmeldenummer: 07718489.3
(22) Anmeldetag: 08.06.2007
(51) Int. Cl.: B23Q 3/06, A61C 13/00

(54) **HALTEANORDNUNG FÜR WERKSTÜCKE**
HOLDING DEVICE FOR WORKPIECES
ENSEMBLE SUPPORT POUR PIÈCES D'USINAGE

(30) Priorität: 13.06.2006 DE 102006027397
(43) Veröffentlichungstag der Anmeldung: 25.02.2009
(73) Patentinhaber: Amann Girrbach AG, 6842 Koblach (AT)
(72) Erfinder: AMANN, Jürgen, A-6842 Koblach (AT)
(74) Vertreter: Hofmann, Ralf U.
(86) Internationale Anmeldenummer: PCT/AT2007/000278
(87) Internationale Veröffentlichungsnummer: WO 2007/143765

(56) Entgegenhaltungen:
- WO-A-02/45614
- WO-A-95/30382
- DE-A1- 3 625 038
- DE-A1- 10 037 531
- US-A- 4 759 488

## Beschreibung

Die Erfindung betrifft eine Anordnung mit einer Klemmvorrichtung und einem Spannrahmen und einer Halteanordnung und einem Werkstück zum Bearbeiten in spanabhebenden Bearbeitungsvorrichtungen, wobei das Werkstück form- und/oder kraftschlüssig in die Halteanordnung eingesetzt und in der Bearbeitungsvorrichtung festlegbar ist und die Halteanordnung als das Werkstück zumindest in einer Ebene umschließender Rahmen ausgebildet ist und das Werkstück samt Halteanordnung mittels der Klemmvorrichtung und des Spannrahmens fest und unverschiebbar in die spanabhebende Bearbeitungsvorrichtung einsetzbar ist wobei die Halteanordnung als Kunststoffteil gefertigt ist.

In solchen Bearbeitungsvorrichtungen müssen Werkstücke positionsgerecht und vor allem sicher gehalten werden können, um ein Verrutschen während der Bearbeitung verhindern zu können. Gerade dann, wenn ganz kleine Toleranzbereiche eingehalten werden müssen, ist dies von wesentlicher Bedeutung.

Vielfach werden die Werkstücke zwischen Backen eingespannt oder sie werden in vorbereitete Öffnungen eingeklebt, wobei dann aber eine ganze Weile zugewartet werden muss, bis mit der Bearbeitung begonnen werden kann.

Vorrichtungen der eingangs genannten Art sind bereits aus der DE10037531 C2 und der DE29815486U1 bekannt. Hier ist für den Rohling zur Herstellung eines Zahnersatzteiles ein Tragkörper vorgesehen mit einer den Rohling haltenden Innenseite und einer in eine in ein Bearbeitungswerkzeug einsetzbare Außenseite aufweist. Der Rohling soll dabei den Tragkörper in keiner Richtung überragen. Bei der erstgenannten Veröffentlichung wird auch noch vorgesehen, dass der Rohling nur teilweise an einer Ausnehmung im Tragkörper befestigt ist. Bei diesen Ausgestaltungen ist aber kein konkreter vorhanden, wie dann dieser Tragkörper in einer Bearbeitungsvorrichtung gehalten werden soll.

Aus der gattungsgemäßen WO 02/45614 A1 ist eine Anordnung bekannt, bei der die Halteanordnung als das Werkstück zumindest in einer Ebene umschließender Rahmen ausgebildet ist, so dass das Werkstück samt Halteanordnung mittels einer Klemmvorrichtung fest und unverschiebbar in eine spanabhebende Bearbeitungsvorrichtung einsetzbar ist.

Die Erfindung hat sich zur Aufgabe gestellt, gattungsgemäße Anordnungen dahingehend zu verbessem, dass in einfacher Weise und gleich bleibenden Genauigkeit ein optimaler Einsatz in der Bearbeitungsvorrichtung erfolgen kann.

Erfindungsgemäß gelingt dies dadurch, dass der Spannrahmen in einer vorzugsweise mittigen Ausnehmung mit einer Vielzahl von nach innen frei auskragenden Stützteilen und Aufnahmeteilen ausgestattet ist und zum Erreichen einer großen Anlagefläche der Halteanordnung am Werkstück an der Halteanordnung ein, vorzugsweise um das Werkstück umlaufender, Steg vorgesehen ist, wobei der Steg wulstartig ausgebildet ist oder als dünner plattenförmiger Teil bis zum oberen Abschluss des Werkstücks geführt ist.

Das Werkstück kann schon lange vor der Bearbeitung in einer Bearbeitungsvorrichtung für den Bearbeitungsvorgang vorbereitet werden. In der Bearbeitungsvorrichtung selbst ist dann nur noch ein ordnungsgemäßes Einsetzen und Festklemmen erforderlich. Das Werkstück ist dadurch immer exakt gleich in der Bearbeitungsvorrichtung anzuordnen. Die Elemente zur Aufnahme des Werkstückes samt Halteanordnung können immer gleich gestaltet werden, da nicht jedes Mal eine Einzelanpassung erforderlich ist.

Ob nun die Werkstücke eine besondere Form aufweisen oder kleiner oder größer ausgeführt sind, ergibt keine Änderung beim Einsatz in der Bearbeitungsvorrichtung, da die Haltevorrichtung in ihren Außenabmessungen immer exakt gleich gestaltet werden kann. Die das Halteelement aufnehmende Ausnehmung in der Bearbeitungsvorrichtung kann so auch immer samt den Stützteilen und den Aufnanmenteilen sowie der Klemmvorrichtung exakt gleich ausgebildet sein. Es bedarf lediglich einer vorab durchrufütuenden, sicheren Befestigung des Werkstückes in der Halteanordnung.

Durch die Erfindung ist auch eine gute Halterung für das Werkstück und ferner eine besondere Steifigkeit der Halteanordnung geschaffen worden, was insbesondere dann wesentlich ist wenn die Halteanordnung mit einer Klemmvorrichtung gehalten werden soll. Es sind also in der Bearbeitungsvorrichtung selbst keinerlei Vorarbeiten und Einrichtarbeiten mehr erforderlich. Ein Einlegen und Festklemmen ist die einzige dann noch erforderliche Maßnahme.

In vorteilhafter Weise weisen die Aufnahmeteile etwa mittig einen Schlitz auf, in welchen der eine Rand der Halteanordnung einschiebbar ist Allein durch das Einschieben bzw. Einsetzen des Randes in die Aufnahmeteile ist dieser eine Rand der Halteanordnung schon optimal gehalten.

Wenn dann in diesem Zusammenhang noch vorgesehen wird, dass der weitere Randabschnitt der Halteanordnung lediglich auf den Stützteilen aufliegt, wobei nach einem Verdrehen der Klemmvorrichtung auch dieser gegenüberliegende Rand der Haltevorrichtung fest eingespannt ist, dann ist immer ohne besondere Einstellarbeiten eine exakte Anordnung der Haltevorrichtung samt Werkstück in der Bearbeitungsvorrichtung gegeben.

Eine besondere Ausgestaltung sieht vor, dass die Halteanordnung eine Vielzahl von Löchem und/oder Schlitzen aufweist. Dies bringt nicht nur in der besonders einfachen Handhabung Vorteile mit sich, sondern es ergibt sich dadurch auch eine noch weiter optimierte Lösung zum Absaugen des bei der spanabhebenden Bearbeitung entstehenden Staubes, weil dieser nach unten hin über diese Löcher und/oder Schlitze abgesaugt werden kann.

Weiter wird vorgesehen, dass die Halteanordnung zumindest annähernd auf der halben Höhe des Werkstückes dieses umfasst. Das Werkstück steht also unterhalb und oberhalb der Halteanordnung etwa gleich weit vor. Der Einsatz des Werkstückes in der Bearbeitungsvorrichtung kann also beliebige erfolgen, sofern das Werkstück eine entsprechende Form aufweist

Eine einfache Lösung ergibt sich dann, wenn das Werkstück und die Halteanordnung miteinander verklebt sind. Infolge der Vorabherstellung ist es auch immer gewährleistet, dass der Klebstoff voll ausgehärtet ist, um einer anschließenden Bearbeitung des Werkstückes standhalten zu können.

Eine weitere Möglichkeit sieht vor, dass das Werkstück und die Halteanordnung miteinander verschweißt sind. Je nach Art des Werkstoffes des Werkstückes kann also die passende Verbindung mit der Halteanordnung geschaffen werden.

Damit eine einfache und wirkungsvolle Verbindung zwischen Werkstück und Halteanordnung ermöglicht wird. Ist es vorteilhaft, wenn die Halteanordnung mehrteilig ausgeführt ist. Bei der Vormontage der Werkstücke in der Halteanordnung wirkt sich dies positiv aus.

In diesem Zusammengang wird vorgeschlagen, dass die einzelnen Teile der Halteanordnung einander überlappend miteinander fest verbunden sind. Dadurch ist ein Zusammenfügen der Halteanordnung einfach möglich und trotzdem kann ein in sich stabiles und vor allem auch zusammen mit dem Werkstück einheitliches Element geschaffen werden.

Eine weitergehende Möglichkeit sieht vor, dass bei Einsatz in einem Kopierfräsgerät sowohl das Werkstück als auch ein abzutastendes Modell in eine Halteanordnung eingesetzt sind. Es sind dann also Werkstück und Modell sicher und in immer gleich bleibenden Stellungen in der Bearbeitungsvorrichtung anzuordnen.

Weitere erfindungsgemäße Merkmale und besondere Vorteile werden in der nachstehenden Beschreibung anhand der Zeichnungen noch näher erläutert. Es zeigen:
- Fig. 1: eine Schrägsicht eines in eine Halteanordnung eingesetzten Werkstückes;
- Fig. 2: eine Draufsicht auf die Anordnung nach Fig.1;
- Fig. 3: ein in einen Spannrahmen einer Bearbeitungsvorrichtung eingesetztes Werkstück in Schrägsicht;
- Fig. 4: ein in einen Spannrahmen einer Bearbeitungsvorrichtung eingesetztes Werkstück in Draufsicht;
- Fig. 5: ein in einen Spannrahmen einer Bearbeitungsvorrichtung eingesetztes Modell in Schrägsicht;
- Fig. 6: ein in einen Spannrahmen einer Bearbeitungsvorrichtung eingesetztes Modell in Draufsicht;
- Fig. 7: ein Kopierfräsgerät mit eingesetzten Spannrahmen für ein Modell und ein Werk- stück in Schrägsicht.

Bei der Bearbeitung von Werkstücken aus insbesondere weicheren Werkstoffen, die nachträglich, also nach der Bearbeitung einer Härtung oder Sinterung unterzogen werden, ergeben sich vielfach Probleme beim Einsetzen in den Bearbeitungsvorrichtungen. Es kann in der Regel nicht allzu großer Anpressdruck zum Einspannen ausgeübt werden und ferner ein exaktes Einsetzen Bedingung für eine Bearbeitung in kleinen Toleranzgrenzen.

Hier setzt nun die Erfindung an. Das Werkstück 1 ist form- und/oder kraftschlüssig in eine Halteanordnung 2 eingesetzt. Dabei ist die Halteanordnung 2 als das Werkstück 1 zumindest in einer Ebene umschließender Rahmen ausgebildet.

Die das Werkstück 1 tragende Halteanordnung 2 weist eine Vielzahl von Löchern und/oder Schlitzen 3 auf, über die beim Einsatz in einer Bearbeitungsvorrichtung auch eine Staubabsaugung erfolgen kann.

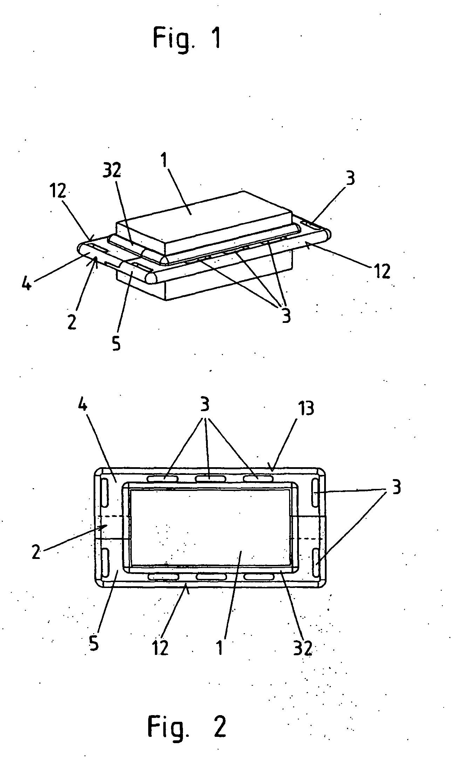

Wie aus Fig. 1 ersichtlich ist, umfasst die Halteanordnung 2 zumindest annähernd auf der halben Höhe das Werkstück 1. Dabei kann auf die Form und Größe des Werkstückes 1 entsprechend Rücksicht genommen werden.

Vorteilhaft werden das Werkstück 1 und die Halteanordnung 2 miteinander verklebt. Im Rahmen der Erfindung sind aber auch andere Arten der gegenseitigen Befestigung möglich. So ist es beispielsweise denkbar, dass das Werkstück 1 und die Halteanordnung 2 miteinander verschweißt sind.

Gerade aus Gründen der einfacheren Fertigung und Montage ist es vorteilhaft, wenn die Halteanordnung 2 mehrteilig ausgeführt ist. Je nach Größe des Werkstückes 1 kann es sich dabei um 2 oder mehr als zwei Einzelteile handeln. Vorteilhaft werden jeweils in gleicher Form und Größe gefertigte Einzelteile eingesetzt. Um eine gegenseitig feste Verbindung zu erreichen, sind die einzelnen Teile 4,5 der Halteanordnung 2 einander überlappend miteinander fest verbunden.

Die Verbindung zwischen dem Werkstück 1 und der Halteanordnung 2 kann nicht nur durch Kleben oder Schweißen erfolgen, sondern es ist jede Art von kraft- und/oder formschlüssiger Verbindung anwendbar. Es muss nur immer gewährleistet sein, dass das Werkstück 1 sicher und unverrückbar in der Halteanordnung gehalten ist, um eine genaue Bearbeitung vornehmen zu können.

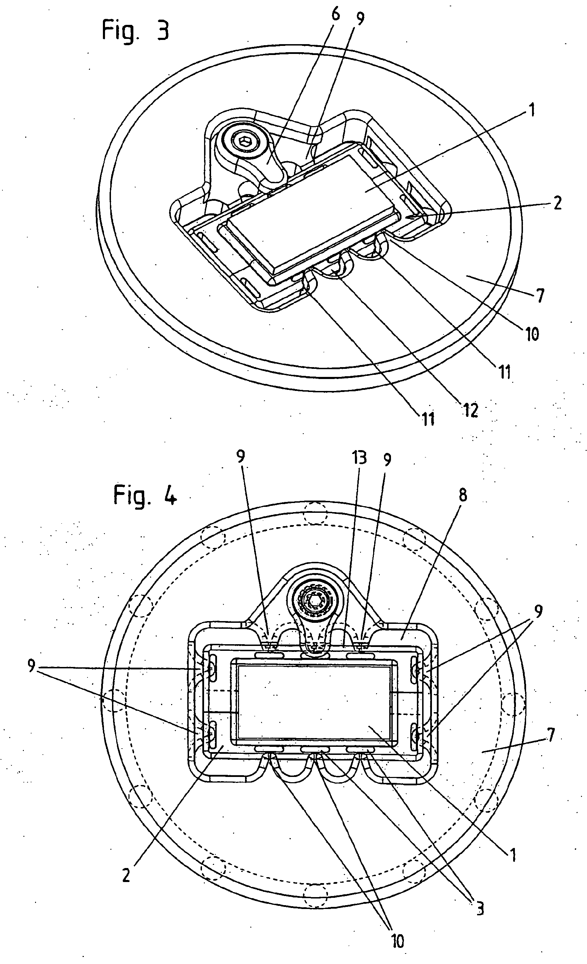

Wie den Fig. 3 und 4 entnommen werden kann, ist das Werkstück 1 samt Halteanordnung 2 mittels einer Klemmvorrichtung 6 fest und unverschiebbar in einer spanabhebenden Bearbeitungsvorrichtung, und zwar an einem dort einfügbaren Spannrahmen 7 einsetzbar. In einer vorzugsweise mittigen Ausnehmung 8 sind eine Vielzahl von nach innen frei auskragende Stützteile 9 und Aufnahmeteile 10 vorgesehen. Die Aufnahmeteile 10 weisen etwa mittig einen Schlitz 11 auf, in welchen der eine Rand 12 der Halteanordnung 2 eingeschoben werden kann. Der weitere Randabschnitt der Halteanordnung 2 liegt lediglich auf den Stützteilen 9 auf. Nach dem Verdrehen der Klemmvorrichtung 6 wird auch der gegenüberliegende Rand 13 fest eingespannt, worauf dann die Bearbeitung beginnen kann.

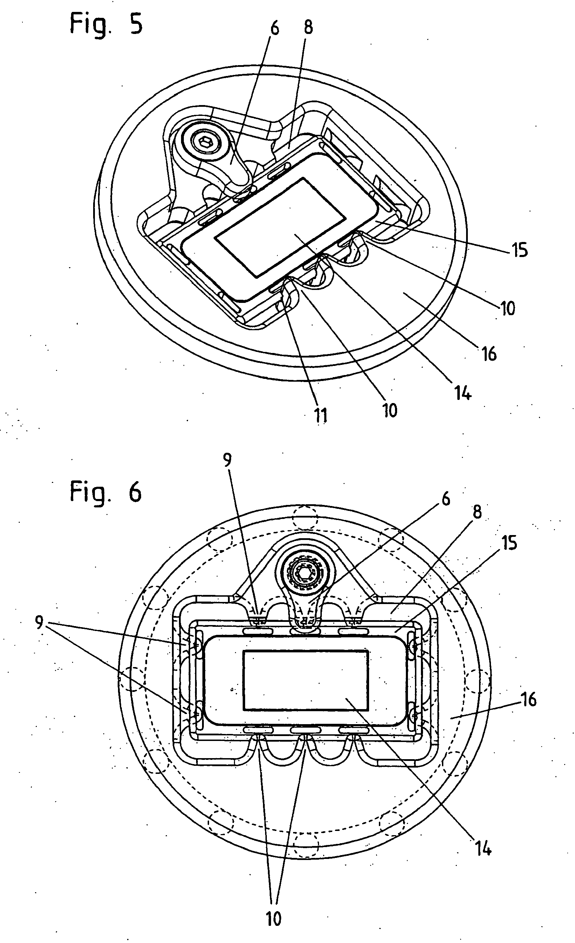

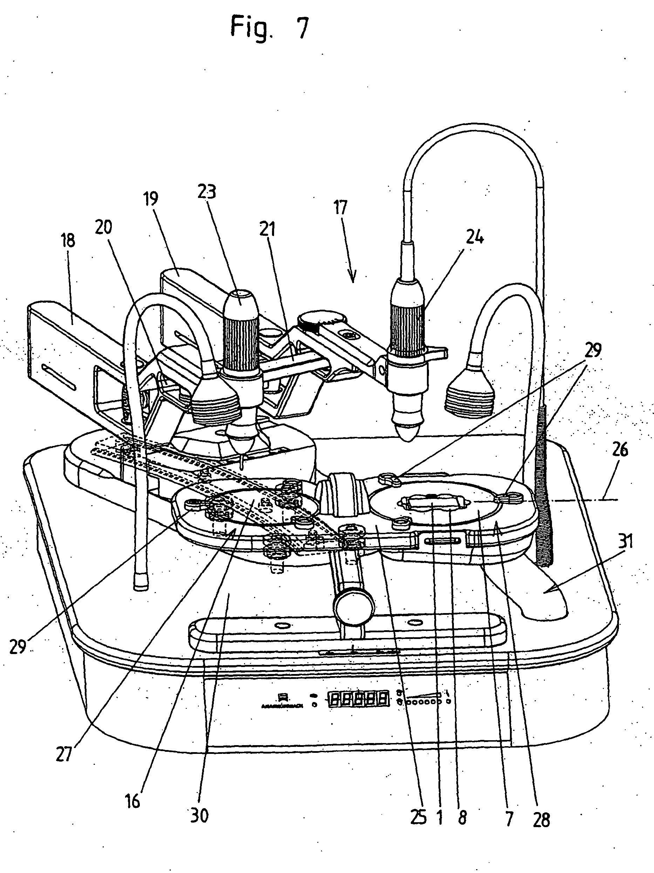

Bei Einsatz in einem Kopierfräsgerät, welches noch anhand der Fig. 7 näher erläutert werden soll, wird sowohl das Werkstück 1 als auch ein abzutastendes Modell 14 in eine Halteanordnung 2 bzw. 15 eingesetzt. Gemäß den Fig. 5 und 6 können hier beim Modell 14 die gleichen konstruktiven und auch vorbereitenden Maßnahmen vorgesehen werden wie beim Werkstück 1 mit der Halteanordnung 2. Hier erfolgt jedoch der Einsatz in einem Spannrahmen 16.

Aus Fig. 7 ist eine besondere Ausgestaltung eines Kopierfräsgerätes 17 ersichtlich, welches einen von Armen 18, 19 und Hebeln 20, 21 gebildeten Pantographen 22 mit einer Abtasteinheit 23 und einer Fräseinheit 24 aufweist. Weiters ist eine Arbeitsplatte 25 vorgesehen, welche um eine horizontale Achse 26 verdrehbar gehalten ist. Die Arbeitsplatte 25 weist zwei Aufnahmebereiche 27, 28 für mittels einer Klemmbefestigung 29 fixierbare Spannrahmen 7 und 16 auf. Am Spannrahmen 16 ist das abzutastende Modell 14 und am Spannrahmen 7 das zu bearbeitende Werkstück 1 festlegbar.

Die große Arbeitsplatte 25 dient also zur Aufnahme der tellerartigen Spannrahmen 7, 16 und ist um die horizontale Achse 26 um bis zu 360° schwenkbar, um das Bearbeiten des Rohlingsmaterials optimal zu gewährleisten. Sie ist auf der Grundplatte 30 befestigt und in Richtung parallel zur Achse 26 verschiebbar gestaltet, um sie den entsprechenden prozentualen Veränderungen anzupassen zu können.

Gerade bei der erfindungsgemäßen Ausgestaltung ist es ermöglicht, eine einwandfreie Staubabsaugung vornehmen zu können. Die Arbeitsplatte 25 weist zumindest im Aufnahmebereich 28 des zu bearbeitenden Werkstückes 1 oder eben im Bereich des die Werkstücke 1 aufnehmenden Spannrahmens 7 Durchtrittsöffnung 8 auf und unterhalb der Arbeitsplatte 7 ist eine Absaugeinrichtung 31 (oder zumindest ein Absaugtrichter mit einem Absaugschlauch, der zur einer Absauganlage führt) angeordnet. Dabei wirkt zusätzlich mit, dass das Werkstück 1 in der Halteanordnung 2 vormontiert ist, so dass auch hier vorgesehene, zusätzliche Löcher oder Schlitze 3 die Absaugmöglichkeit noch verbessern.

Mit dem erfindungsgemäßen Kopierfräsgerät sollen insbesondere Werkstücke aus keramischen Werkstoffen für die Dentaltechnik bearbeitet werden. Dabei ist besonders Zirkoniumdioxid vorgesehen. Zirkoniumdioxid oder Aluminiumoxid dient beim Kopierfräsen als Grundbearbeitungswerkstoff im teilgesinterten Zustand, der so genannte Weißling. Der Werkstoff lässt sich in diesem Zustand leicht ver- und bearbeiten. Die Aufnahme des Werkstückes 1 und auch eines Modells 14 ist in einem geschilderten und gezeigten Kopierfräsgerät möglich. Es ist aber auch für den Einsatz im allgemeinen Maschinenbau, in der Kunststofftechnik und in anderen Bearbeitungsbereichen, d.h. also bei der Bearbeitung und somit beim Kopierfräsen oder Kopierschleifen von irgendwelchen Materialien denkbar. So ist auch die Schmuckbearbeitung mit einzubeziehen. Das zu bearbeitende Schmuckstück kann also ebenfalls in einer entsprechenden Halteanordnung gehalten werden.

Die Halteanordnung selbst ist als Kunststoffteil gefertigt. Es muss nur die erforderliche Steifigkeit für den entsprechenden Bearbeitungsvorgang gewährleistet sein.

Die Halteanordnung 2 für das Werkstück 1 kann jede beliebige Form haben. In Draufsicht kann die Halteanordnung 2 also oval, kreisförmig, quadratisch, rechteckig, dreieckig, sechs- oder achteckig ausgeführt oder jede andere beliebige Form aufweisen.

So ist es auch denkbar, das Werkstück 1 gleich in eine Halteanordnung einzusetzen, welche die Größe und Form des Spannrahmens 7 bzw. 16 aufweist. Die Halteanordnung ist dann zwar wesentlich größer, doch kann man sich dann die zusätzlich ansonsten erforderlichen Klemmbefestigungen 29 einsparen.

Wie aus den Fig. 1 und 2 ersichtlich ist, kann bei der Halteanordnung 2 ein vorzugsweise umlaufender, wulstartiger Steg 32 vorgesehen werden, der eine größere Anlagefläche der Halteanordnung 2 am Werkstück 1 bewirkt und somit eine bessere gegenseitige Befestigung ermöglicht. Es ist auch denkbar, dass dieser Steg 32 eventuell auch als dünner plattenförmiger Teil bis zum oberen Abschluss des Werkstückes geführt ist, so dass die Anlagefläche nochmals vergrößert wird. Dabei ist auch eine Variante möglich, nach der dieser Steg auch noch den oberen Rand des Werkstückes 1 übergreift, in diesem Bereich also noch einen rechtwinklig abgebogenen Abschnitt oder eine durchgehende Leiste aufweist. Es ist dann sogar beim Einsetzen des Werkstückes 1 in die Halteanordnung 2 ein Anschlag für eine optimale Montage gegeben. Es kann damit aber auch die obere Kante des Werkstückes geschützt werden, was insbesondere dann vorteilhaft ist, wenn das Werkstück aus einem leicht beschädigbaren Material besteht.

### Legende zu den Hinweisziffern:

- 1: Werkstück
- 2: Halteanordnung
- 3: Schlitze
- 4: Teil der Halteanordnung
- 5: Teil der Halteanordnung
- 6: Klemmvorrichtung
- 7: Spannrahmen
- 8: Ausnehmung
- 9: Stützteile
- 10: Aufnahmeteile
- 11: Schlitz
- 12: Rand
- 13: Rand
- 14: Modell
- 15: Halteanordnung
- 16: Spannrahmen
- 17: Kopierfräsgerät
- 18: Arm
- 19: Arm
- 20: Hebel
- 21: Hebel
- 22: Pantograph
- 23: Abtasteinheit
- 24: Fräseinheit
- 25: Arbeitsplatte
- 26: Achse
- 27: Aufnahmebereich
- 28: Aufnahmebereich
- 29: Klemmbefestigung
- 30: Grundplatte
- 31: Absaugeinrichtung
- 32: Steg

## Patentansprüche

1. Anordnung mit einer Klemmvorrichtung (6) und einem Spannrahmen (7) und einer Halteartordnung (2) und einem Werkstück (1) zum Bearbeiten in spanabhebenden Bearbeitungsvorrichtungen, wobei das Werkstück (1) form-und/oder kraftschlüssig in die Halteanordnung (2) eingesetzt und in der Bearbeitungsvorrichtung festlegbar ist und die Halteanordnung (2) eingesetzt Werkstück (1) zumindest in einer Ebene umschließender Rahmen ausgebildet ist und das Werkstück (1) samt Halteanordnung (2) mittels der Klemmvorrichtung (6) und des Spannrahmens (7) fest und unverschiebbar in die spanabhebende Bearbeitungsvorrichtung einsetzbar ist, wobei die Halteanordnung (2) als Kunsoffteil gefertigt ist, **dadurch gekennzeichnet, dass** der Spannrahmen (7) mit einer, vorzugsweise mittigen. Ausnehmung (8) mit einer Vielzahl von nach innen frei auskragenden Stützteilen (9) und Aufnahmeteilen (10) ausgestattet ist und zum Erreichen einer großen Anlagefläche der Halteanordnung (2) am Werkstück (1) an der Halteanordnung (2) ein, vorzugsweise um das Werkstück (1) umlaufender, Steg (32) vorgesehen ist, wobei der Steg (32) wulstartig ausgebildet ist oder als dünner plattenförmiger Teil bis zum oberen Abschluss des Werkstücks (1) geführt ist

2. Anordnung nach Anspruch 1, **dadurch gekennzeichnet, dass** die Aufnahmeteile (10) etwa mittig einen Schlitz (11) aufweisen, in welchen der eine Rand (12) der Halteanordnung (2) einschiebbar ist.

3. Anordnung nach Anspruch 1, **dadurch gekennzeichnet, dass** der weitere Randabschnitt der Halteanordnung (2) lediglich auf den Stützteilen (9) aufliegt wobei nach einem Verdrehen der Klemmvorrichtung (6) auch dieser gegenüberliegende Rand (13) der Haltevorrichtung fest eingespannt ist.

4. Anordnung nach einem der Ansprüche 1 bis 3, **dadurch gekennzeichnet, dass** die Halteanordnung (2) eine Vielzahl von Löchem und/oder Schlitzen (3) aufweist

5. Anordnung nach den Ansprüchen 1 bis 4, **dadurch gekennzeichnet, dass** die Halteanordnung (2) zumindest annähernd auf der halben Höhe des Werkstückes (1) dieses umfasst

6. Anordnung nach einem der Ansprüche 1 bis 5, **dadurch gekennzeichet, dass** das Werkstück (1) und die Halteanordnung (2) miteinander verklebt sind

7. Anordnung nach einem der Ansprüche 1 bis 5, **dadurch gekennzeichnet, dass** das Werkstück (1) und die Halteanordnung (2) miteinander verschweißt sind

8. Anordnung nach einem der vorstehenden Ansprüche, **dadurch gekennzeichnet, dass** die Halteanordnung (2) mehrteilig ausgeführt ist.

9. Anordnung nach Anspruch 8, **dadurch gekennzeichnet, dass** die einzelnen Teile (4,5) der Halteanordnung (2) einander überlappend miteinander fest verbunden sind.

10. Anordnung nach einem der Ansprüche 1 bis 9, **dadurch gekennzeichnet, dass** bei Einsatz in einem Kopierfräsgerät (17) sowohl das Werkstück (1) als auch ein abzutastendes Modell (14) in eine Halteanordnung (2,15) eingesetzt sind.

11. Anordnung nach einem der Ansprüche 1 bis 10, **dadurch gekennzeichnet, dass** der Steg (32) den oberen Rand des Werkstücks (1) übergreift.

12. Anordnung nach Anspruch 11, **dadurch gekennzeichnet, dass** der Steg (32) in den Bereich, in dem er den oberen Rand des Werkstücks (1) übergreift, einen rechtwinklig abgebogenen Abschnitt oder eine durchgehende Leiste aufweist.

## Claims

1. Arrangement having a clamping device, (6) and a securing frame (7) and a holding Arrangement (2) and a workpiece (1) to be machined in stock-removing machining apparatus, the workpiece (1) being inserted in the holding arrangement (2) in positively interengaged or frictional engagement and being able to be locked in the machining apparatus, and the holding arrangement (2) taking the form of a frame which surrounds the workpiece (1) in at least one plane and the workpiece (1) plus the holding arrangement (2) being able to be solidly and non-displaceably inserted in the stock-removing machining apparatus by means of the clamping device (6) and the securing frame (7), the holding arrangement (2) being produced as a part made of plastics material, **characterised in that** the securing frame (7) is provided with a preferably central recess (8) having a plurality of supporting parts (9) and receiving parts (10) which are freely cantilevered out in the inward direction and, to obtain a large area on the holding arrangement (2) for the workpiece (1) to rest against, there is provided on the holding arrangement (2) a ridge (32) which preferably extends circumferentially round the workpiece (1), the: ridge (32) taking a bead-like form or extending to the upper terminal face of the workpiece (1) in the form of a thin plate-like part.

2. Arrangement according to claim 1, **characterised in that** the receiving parts (10) have, approximately in the centre, a slot (11) into which one edge (12) of the holding arrangement (2) can be inserted.

3. Arrangement according to claim 1, **characterised in that** the other edge portion of the holding arrangement (2) rests merely on the supporting parts (9), this opposite edge (13) of the holding arrangement also being clamped firmly in place once the clamping device (6) has been rotated.

4. Arrangement according to one of claims 1 to 3, **characterised in that** the holding arrangement (2) has a plurality of holes and/or slots (3),

5. Arrangement according to claims 1 to 4, **characterised in that** the holding arrangement (2) surrounds the workpiece (1) at a point at least approximately halfway up the latter.

6. Arrangement according to one of claims to 5, **characterised in that** the workpiece (1) and the holding arrangement (2) are adhesive-bonded together.

7. Arrangement according to one of claims to 5, **characterised in that** the workpiece (1) and the holding arrangement (2) are welded together.

8. Arrangement according to one of the preceding claims, **characterised in that** the holding arrangement (2) is produced in a plurality of parts.

9. Arrangement according to claim 8, **characterised in that** the individual parts (4, 5) of the holding arrangement (2) are connected together with a mutual overlap.

10. Arrangement according to one of claims 1 to 9, **characterised in that**, when inserted in a copy-milling apparatus (17), both the workpiece (1) and a model (14) to be traced are inserted in a holding arrangement (2, 15).

11. Arrangement according to one of claims 1 to 10; **characterised in that** the ridge (32) engages over the top edge of the workpiece (1).

12. Arrangement according to claim 11, **characterised in that**, in the region in which it engages, over the upper edge of the workpiece (1), the ridge (32) has a portion which is angled round at right angles or a continuous strip.

## Revendications

1. Agencement avec un dispositif de serrage (6), un cadre de serrage (7), un dispositif de maintien (2) et une pièce (1), destiné à l'usinage dans des systèmes d'usinage à enlèvement de copeaux, où la pièce (1) est mise en place dans le dispositif de maintien (2) par accouplement mécanique et/ou par adhérence et est fixable dans le système d'usinage, et le dispositif de maintien (2) réalisé comme cadre entourant la pièce (1) au moins sur un plan et où la pièce (1) et le dispositif de maintien (2) peuvent être fixement mis en place et immobilisés au moyen du dispositif de serrage (6) et du cadre de serrage (7) dans le système d'usinage à enlèvement de copeaux, où le dispositif de maintien (2) est réalisé comme pièce en matière plastique, **caractérisé en ce que** le cadre de serrage (7) est pourvu d'un évidement (8) préférentiellement central avec une pluralité de pièces d'appui (9) et de pièces de réception (10) en saillie libre vers l'intérieur, et **en ce que**, pour obtenir une grande surface d'application du dispositif de maintien (2) contre la pièce (1), une nervure (32), entourant préférentiellement la pièce, est prévue sur le dispositif de maintien (2), ladite nervure (32) étant réalisée en forme de boudin, ou redressée comme pièce en forme de plaquette mince jusqu'au sommet de la pièce (1).

2. Agencement selon la revendication 1, **caractérisé en ce que** les pièces de réception (10) présentent une fente (11) sensiblement centrale, dans laquelle le premier bord (12) du dispositif de maintien (2) est insérable.

3. Agencement selon la revendication 1, **caractérisé en ce que** l'autre partie de bord du dispositif de maintien (2) repose seulement sur les pièces d'appui (9), ledit bord (13) opposé du dispositif de maintien étant fixement serré lui aussi après rotation du dispositif de serrage (6).

4. Agencement selon l'une des revendications 1 à 3, **caractérisé en ce que** le dispositif de maintien (2) comporte une pluralité de trous et/ou de fentes (3).

5. Agencement selon les revendications 1 à 4, **caractérisé en ce que** le dispositif de maintien (2) entoure la pièce (1) au moins approximativement à mi-hauteur de celle-ci.

6. Agencement selon l'une des revendications 1 à 5, **caractérisé en ce que** la pièce (1) et le dispositif de maintien (2) sont collés ensemble.

7. Agencement selon l'une des revendications 1 à 5, **caractérisé en ce que** la pièce (1) et le dispositif de maintien (2) sont soudés ensemble.

8. Agencement selon la revendication 1 et l'une des revendications précédentes, **caractérisé en ce que** le dispositif de maintien (2) est composé de plusieurs pièces.

9. Agencement selon la revendication 8, **caractérisé en ce que** les différentes pièces (4, 5) du dispositif de maintien (2) sont fixement reliées entre elles en se chevauchant mutuellement.

10. Agencement selon l'une des revendications 1 à 9, **caractérisé en ce qu'**en cas d'utilisation dans une fraiseuse à copier (17), la pièce (1) ainsi qu'un modèle à palper (14) sont mis en place dans un dispositif de maintien (2, 15).

11. Agencement selon l'une des revendications 1 à 10, **caractérisé en ce que** la nervure (32) empiète sur le bord supérieur de la pièce (1).

12. Agencement selon la revendication 11, **caractérisé en ce que** la nervure (32) présente une partie pliée à angle droit ou une patte continue dans la zone où elle empiète sur le bord supérieur de la pièce (1).
